# EUROPEAN PATENT SPECIFICATION

(11) **EP 2 308 149 B1**
(45) Date of publication and mention of the grant of the patent: **30.08.2017**
(21) Application number: 08773223.6
(22) Date of filing: 21.07.2008
(51) Int. Cl.: H02J 13/00, H02H 3/06, H02H 7/26, H02J 3/00

(54) **FEEDER AUTOMATION SYSTEM AND METHOD FOR OPERATING THE SAME**
FEEDER-AUTOMATISIERUNGSSYSTEM UND VERFAHREN ZU SEINEM BETRIEB
SYSTÈME D'AUTOMATISATION DE LIGNE D'ALIMENTATION ET SON PROCÉDÉ DE FONCTIONNEMENT

(43) Date of publication of application: 13.04.2011
(73) Proprietor: ABB Research Ltd., 8050 Zürich (CH)
(72) Inventor: WANG, Zhao, Beijing 100016 (CN); JING, Lei, Beijing 100016 (CN); MA, Wenxiao, Beijing 100016 (CN); WANG, Gang, Beijing 100016 (CN)
(74) Representative: Zimmermann & Partner Patentanwälte mbB
(86) International application number: PCT/CN2008/071697
(87) International publication number: WO 2010/009588

(56) References cited:
- EP-A1- 1 443 624
- EP-A2- 0 948 111
- US-A- 5 517 423
- US-A- 5 926 089
- US-A- 5 973 899
- US-B2- 6 988 023
- SRINIVASAN D ET AL: "Intelligent operation of distribution network", IEE PROCEEDINGS: GENERATION, TRANSMISSION AND DISTRIBUTION, INSTITUTION OF ELECTRICAL ENGINEERS, GB, vol. 141, no. 2, 1 March 1994 (1994-03-01) , pages 106-16, XP006001806, ISSN: 1350-2360, DOI: 10.1049/IP-GTD:19949769
- JIYUAN FAN ET AL: 'Feeder Automation within the Scope of Substation Automation.' POWER SYSTEMS CONFERENCE AND EXPOSITION, 2006. PSCE'06. 2006 IEEE PES 29 October 2006 - 01 November 2006, pages 607 - 612, XP008142309

## Description

### Field of the Invention

This invention relates to the field of power distribution technologies, and in particular to a method and a system for implementing feeder automation in a power distribution network.

### Background of the invention

Feeder automation (FA) is an important aspect of power distribution automation. A most common architecture currently employed for FA systems is a so called centralized architecture. In an FA system of the centralized architecture, a master station usually located in a central control room is responsible for managing the overall operation of the system. The master station receives data and signals from slave stations, analyzes the data and signals to determine the operational status of the power network, and makes decision on control and operation schemes to be performed, then generates command signals accordingly, and sends the generated command signals to slave stations to conduct the decided control and operation schemes. A slave station is usually provided for each substation and located in the respective substation. The slave station is responsible for transferring data, signals and command signals between the master station and feeder terminal units (FTU) in communication with the slave station. An FTU is provided on each feeder. The FTU includes Tie-switches, section switches, means for collecting information on the current and voltage of the connected feeder and states of the Tie-switches and section switches, means for generating signals of the current, voltage, load power and states of the Tie-switches and section switches from the collected information, and means for sending the signals to the slave station. Upon receiving a signal of, for example, fault from a slave station, the master station will control FTUs through a slave station to perform a series of actions such as fault detection, fault isolation, and service restoration (FDIR).

In this commonly employed architecture, the master station plays an indispensable role in the system. All local operational signals such as the current, voltage, load power, and switch states must be transferred to the master station, and commands from the master station are transferred to the FTU via slave stations for the FTU to perform corresponding operations. This brings about heavy requirement on the bandwidth of communication channels between the master station and the slave stations as well as between the slave stations and corresponding FTUs. Further, once a communication channel is in fault, said FDIR will become unavailable. Another disadvantage of the strategy is the time delay due to communication that may lead to un-prompt response to faults, which may cause severe damage to electricity consumers.

To address this issue, the Chinese patent publication CN1835334A titled "Non-master station transmission and distribution network control method", granted to SHANGHAI SUNRISE-POWER AUTOMATION CO. proposes a method for controlling a transmission & distribution network without a master station. As is well known, upon occurrence of a fault on a feeder, a circuit breaker (CB) provided between the feeder and the corresponding substation will trip immediately. To treat the fault situation, the method comprises steps of: (1) fault detection: relevant FTUs detect abnormal powers, and send fault information to all other FTUs on the same feeder; (2) fault locating: based on the fault information, all the FTUs on the feeder determine the fault point; (3) fault isolation: the FTU directly associated with the fault point opens its section switch, and instructs its downstream FTUs to open their section switches; (4) reporting switch opening: the FTU associated with the fault point and its downstream FTUs send section switch state information to other FTUs upon opening their respective section switches; (5) CB closing: switching on the tripped CB; (6) power supply restoration: restoring power supply to nodes isolated from the fault point.

In the solution proposed in CN1835334A, the FTU that detected a fault will send fault information to all other FTUs on the feeder, the FTU associated with the fault will send commands to all its downstream FTUs, and the FTUs that opened their section switches will report their section switch states to all other FTUs on the feeder. Therefore, communication traffic between FTUs is quite heavy, and there is high requirement on the bandwidth of the communication channels between the FTUs. Further, to implement the method, each FTU needs to know the overall configuration of the feeder. Therefore, when a node on the feeder is changed, reconfiguration shall be conducted on each FTU, which is a difficult task especially in case of a feeder with a large number of FTUs.

Chinese patent publication CN1147982C titled "Method for implementing power distribution automation", granted to QIANJIN ELECTRIC APPLIANCE IND discloses a method for implementing a power distribution system. In this method, an FTU monitors the operational status of section switches and processes fault locally, and sends data regarding the processing to a network communication unit. Communication units of different nodes communicate with each other, so as to cooperate with each other in processing faults in their respective domains.

In the solution proposed in CN1147982C, an FTU can only control a feeder that is only connected to the FTU, that is, a feeder both ends of which are in the domain of the FTU. But in service restoration following a fault, an FTU needs to be able to control feeders in other domains to minimize the influence of the fault on electricity consumers.

The publication from JIYUAN FAN ET AL titled "Feeder Automation within the Scope of Substation Automation" dated 2006-10-29 proposes a dual feeder terminal unit installed on a tie-switch linking two feeders that belong to two different substations.

Document EP0948111 A2 titled "Fault protection arrangements and methods for electric power distribution systems" proposes the use of two real tie-switches, each tie-switch belonging to a respective domain and being controlled by the respective controller of the domain.

Document US5973899A titled "Automated power feeder restoration system and method" discloses a feeder automation system with a dedicated controller configured to operate a tie-switch provided between two domains of a power distribution network.

Accordingly, there exists a need in the art to improve the existing technologies to facilitate more efficient and reliable fault processing with simplified configuration.

### Disclosure of the invention

In view of the above situation in the prior art, the present invention has been made to provide a solution with which the requirement on bandwidth of communication channels is reduced, response to a fault is efficient, influence of network modification on the feeder automation system is restricted in limited domains, and re-configuration of the feeder automation system following network modification is simplified.

In one aspect of the present invention, there is provided a method for operating a feeder automation system comprising: a first domain comprising a first slave station; a second domain comprising a second slave station; and a tie-switch provided between the first domain and the second domain; wherein the first slave station is adapted to operate the tie-switch directly, and the second slave station is adapted to operate the tie-switch through the first slave station.

In a preferred embodiment of the present invention, the tie-switch is configured as a real tie-switch in the first slave station, and as a virtual tie-switch in the second slave station.

In a further preferred embodiment of the present invention, the first slave station comprises the configuration of the first domain, and the first slave station comprises means for supervising and operating the first domain. The second slave station comprises the configuration of the second domain, and the second slave station comprises means for supervising and operating the second domain.

The feeder automation system of the present invention may also comprise a master station in communication with the first slave station and the second slave station. The first domain comprises a terminal device in communication with the first slave station, and the second domain comprises a terminal device in communication with the second slave station.

In another aspect of the present invention, there is provided a method for operating a feeder automation system as described above comprising: detecting, by the first slave station, a fault in the first domain; determining, by the first slave station, the location of the fault in the first domain; isolating, by the first slave station, the location of the fault in the first domain; and restoring, by the first slave station, power supply to the first domain.

In a preferred embodiment, restoring power supply to the first domain further comprises: searching, by the first slave station in the first domain, an available route to a connectivity node that is to be restored with power supply comprising the tie-switch; sending, by the first station, a request to the second slave station to inquire if there is an available route to the tie-switch in the second route; receiving, by the first slave station, a response from the second slave station indicating that there is an available route to the tie-switch in the second domain; closing, by the first slave station, the tie-switch.

The response may comprise information of load capacity of the route in the second domain, and prior to closing the tie-switch, the method further comprises determining, by the first slave station, whether the capacity of the route in the second domain matches the requirement of the connectivity node.

In embodiments of the present invention, the first slave station regularly reports the state of the tie-switch and the energization state of the feeder in the first domain connected to the tie-switch to the second slave station, and the second slave station regularly reports the energization state of the feeder in the second domain connected to the tie-switch to the first slave station.

In embodiments of the present invention, the first slave station receives information from a feeder terminal unit in the first domain prior to detecting the fault; and the second slave station receives information from a feeder terminal unit in the second domain.

The information received by the first slave station may comprise the current and voltage of a feeder and the state of a switch supervised by the feeder terminal unit in the first domain, and the information received by the second slave station may comprise the current and voltage of a feeder and the state of a switch supervised by the feeder terminal unit in the second domain.

If a fault occurs in the second domain, the method for operating the feeder automation system comprises: detecting, by the second slave station, a fault in the second domain; determining, by the second slave station, the location of the fault in the second domain; isolating, by the second slave station, the location of the fault in the second domain; and restoring, by the second slave station, power supply to the second domain.

In this case, restoring power supply to the first domain may further comprise: searching, by the second slave station in the second domain, an available route to a connectivity node that is to be restored with power supply comprising the tie-switch; sending, by the second station, an inquiry request to the first slave station to inquire if there is an available route to the tie-switch in the first route; receiving, by the second slave station, a response from the first slave station indicating that there is an available route to the tie-switch in the first domain; sending, by the second slave station, an operation request to the first slave station to close the tie-switch; and receiving, by the second slave station, a report of closing the tie-switch from the first slave station.

The response may comprise information of the load capacity of the route in the first domain, and prior to closing the tie-switch, the method may further comprise determining, by the second slave station, whether the capacity of the route in the first domain matches the requirement of the connectivity node.

### Brief Description of the Drawings

Fig.1 is a schematic diagram showing a general structure of a feeder automation system for implementing embodiments of the present invention;
Fig.2 is a diagram showing the multi-agent concept of the present invention;
Fig.3 illustrates different configuration of a same Tie-switch in different domains in the present invention;
Fig.4 shows the specific communication between two slave stations in a process of service restoration;
Figs.5-7 show an example of fault processing in the feeder automation system of the present invention.

In all the drawings, a solid circle indicates a closed tie-switch or section switch, a hollow circle indicates an opened tie-switch or section switch. A solid rectangle indicates a closed CB, and a hollow rectangle indicates an opened CB.

### Preferred Embodiments of the Invention

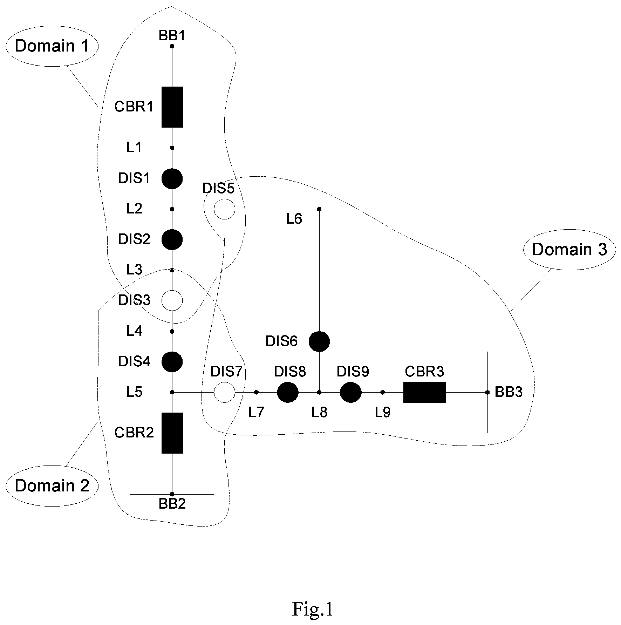

Fig.1 shows a general structure of a feeder automation system for implementing embodiments of the present invention. This feeder automation system is a 3 source network including 3 domains: Domain 1, Domain 2, and Domain 3. But as apparent to those skilled in the art, this is just an example for illustrating the principle of the present invention, and the present invention is not limited to this specific example.

Each domain includes a slave station (not shown). In the following description, the slave station of Domain 1 is indicated as slave station 1, the slave station of Domain 2 is indicated as slave station 2, and the slave station of Domain 3 is indicated as slave station 3. Each domain also includes Intelligent Electronic Devices (IED) like FTU, DTU (Distribution Terminal Unit), and TTU (Transformer Terminal Unit), and primary equipment controlled by the IEDs, like Tie-switches or section switches. In Domain 1, power supply is introduced into the FA system from a bus bar BB1 through circuit breaker CBR1 provided on the inlet line. L1, L2 and L3 are three connectivity nodes to which electricity consumers are connected. The electricity consumers can be end users or lower level substations. Between two adjacent connectivity nodes, a section switch is provided. For example, a section switch Dis 1 is provided between connectivity nodes L1 and L2, Dis 2 is provided between connectivity nodes L2 and L3.

Similarly, in Domain 2, power supply is introduced into the network from a bus bar BB2 through a circuit breaker CBR2. And connectivity nodes L4 and L5 and section switches Dis 3, Dis 4 belong to this domain. In domain 3, power supply is introduced into the network from a bus bar BB3 through a circuit breaker CBR3. And connectivity nodes L6, L7, L8 and L9 and section switches Dis 6, Dis 8 and Dis 9 belong to this domain.

According to relevant specifications, in a network supplied by more than one power sources, each power source supplies a part of the sub-network in normal operation, and each part supplied by a power source is isolated from other parts via a Tie-switch. In Fig.1, the parts supplied by the 3 power sources are isolated from each other via Tie-switches Dis 3, Dis 5 and Dis 7 respectively. And the Tie-switches Dis 3, Dis 5 and Dis 7 each constitute a boundary of a respective domain. In normal operation, the boundary Tie-switches are opened.

As indicated in Fig.1, the boundary Tie-switches Dis 3, Dis 5, and Dis 7 each belongs to more than one domain. Dis 3 belongs to Domain 1 and Domain2, Dis 5 belongs to Domain 1 and Domain 3, and Dis 7 belongs to Domain 2 and Domain 3. That means Dis 3 can be operated by both slave station 1 and slave station 2, Dis 5 can be operated by both slave station 1 and slave station 3, and Dis 7 can be operated by both slave station 2 and slave station 3.

To avoid misoperation on the boundary Tie-switches, slave stations that control a same Tie-switch shall cooperate with each other. In one embodiment of the present invention, a boundary Tie-switch is configured as a real Tie-switch in one domain, and in another domain, the boundary Tie-switch is configured as a virtual Tie-switch. For example, Dis 3 can be configured as a real Tie-switch in Domain 1, and as a virtual Tie-switch in Domain 2. Dis 5 can be configured as a real Tie-switch in Domain 3, and as a virtual Tie-switch in Domain 1. Dis 7 can be configured as a real Tie-switch in Domain 2, and as a virtual Tie-switch in Domain 3.

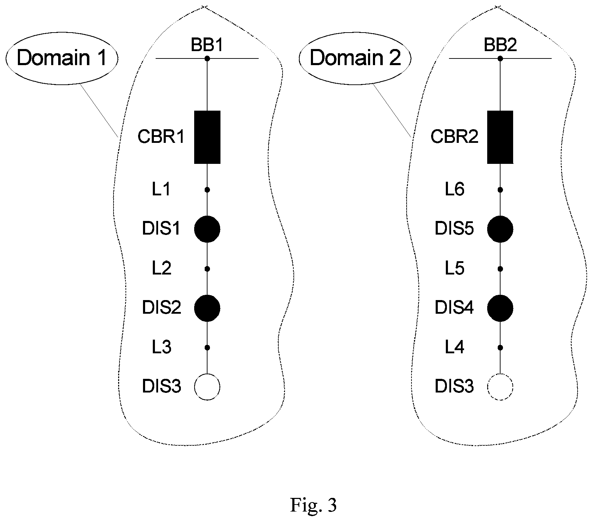

Refer to Fig.3, a real Tie-switch is indicated in the domain as a solid-line circle, while a virtual Tie-switch is indicated in the domain as a broken-line circle. Dis 3 is a real Tie-switch of Domain 1, and a virtual Tie-switch of Domain 2.

A slave station can directly operate a real Tie-switch. But to operate a virtual Tie-switch, it needs to send a request to the slave station of which the Tie-switch is a real one. For example, slave station 1 can operate Dis 3 directly, because Dis 3 is a real Tie-switch of this slave station. If slave station 1 is to operate Dis 5, it needs to send an operating request to slave station 3, and the slave station 3 operates Dis 5 according to the request and other operational conditions, because Dis 5 is a virtual Tie-switch of slave station 1, and a real Tie-switch of slave station 3.

A slave station reports the status of the boundary Tie-switch that is a real Tie-switch of it to the slave station of which the Tie-switch is a virtual one. In the embodiment shown in Fig.3, slave station 1 reports the status of the Tie-switch Dis 3 to slave station 2, because Dis 3 is a real Tie-switch of slave station 1, and a virtual Tie-switch of slave station 2.

With the above architecture, a slave station will perform certain controls and operations independently without intervention from other slave stations or a master station. For example, in case of a fault, the slave station can detect the fault, determine the location of the fault and isolate the fault independently. To restore power supply stopped by a fault, the slave station needs to exchange limited information with other slave stations, which will be described in detail later.

As discussed above, in the present invention, various controls and operations are performed by slave stations without intervention from a master station. Therefore, slave stations play important roles in the system. Conceptually, each slave station acts as an agent of the master to execute various functions of the master station.

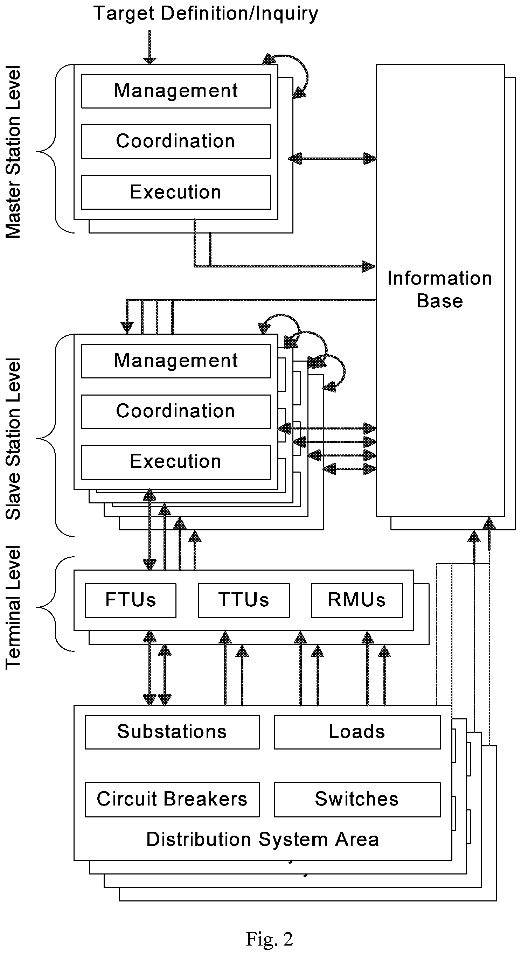

Fig.2 is a diagram showing the multi-agent concept of the present invention. The FA system shown in Fig.2 includes 3 levels, a master station level, a slave station level, and a terminal level. The master station takes overall management of the FA system, controls coordination among different slave stations, and executes, for example, optimization computations and instructs the slave stations to operate accordingly to achieve optimal operation of the whole system. The slave stations take management of their respective domains, and cooperate with other slave stations in case of abnormal situations to provide reliable and high quality services to power consumers. Terminal level devices include FTUs, TTUs and DTUs. They supervise and operate their respective primary equipment under control of their respective slave stations, collect data and signals from their supervised primary equipment, and send the collected data and signals to the respective slave stations.

To cooperate with each other, the slave stations communicate with each other to exchange data and signals. Data and signals exchanged between the slave stations include those necessary for fault restoration, mainly status of a boundary Tie-switch and energization conditions of associated connectivity nodes. Fig.3 illustrates different configuration of a same Tie-switch in different domains.

As mentioned above, Dis 3 is a real Tie-switch of Domain 1 and a virtual Tie-switch of Domain 2. In this case, slave station 1 regularly gets the status of Dis 3, and reports the status of Dis 3 to slave station 2. Slave station 1 also reports the energization condition of the connectivity node L3 to slave station 2 regularly. Similarly, slave station 2 reports the energization condition of the connectivity node L4 to slave station 1 regularly.

In another embodiment, data and signals exchanged between the slave stations further include load capacity of their respective domains.

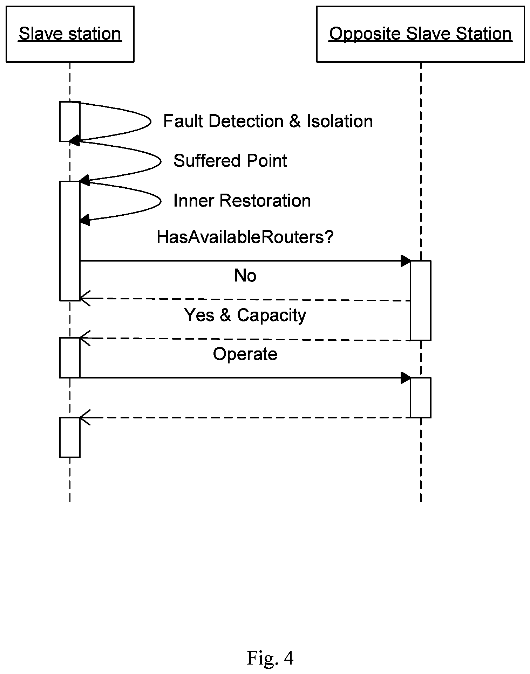

In the following, the principle of the present invention will be illustrated in more details through an example of fault processing by reference to figures 4-7.

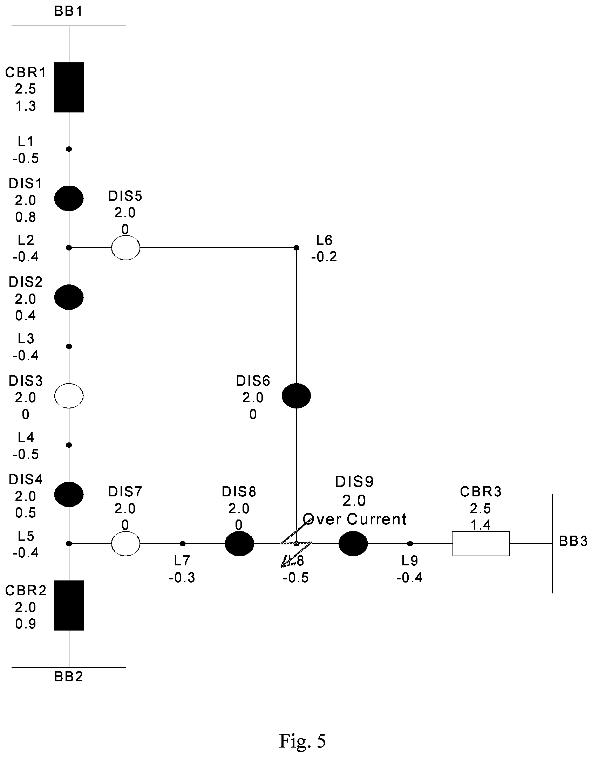

Fig.5 shows a situation where in the power network shown in Fig.1, an over-current fault occurs at connectivity node L8. In this case, the circuit breaker CBR3 will trip, and connectivity nodes L6, L7, L8, and L9 will lose power. Domain 1 and domain 2 will not be influenced because they are isolated from the fault point by Tie-switches Dis 5 and Dis 7.

Upon occurrence of the fault, slave station 3 will determine according to information from Dis 6, Dis 8, and Dis 9 that the fault is in connectivity node L8. This process is called fault detection.

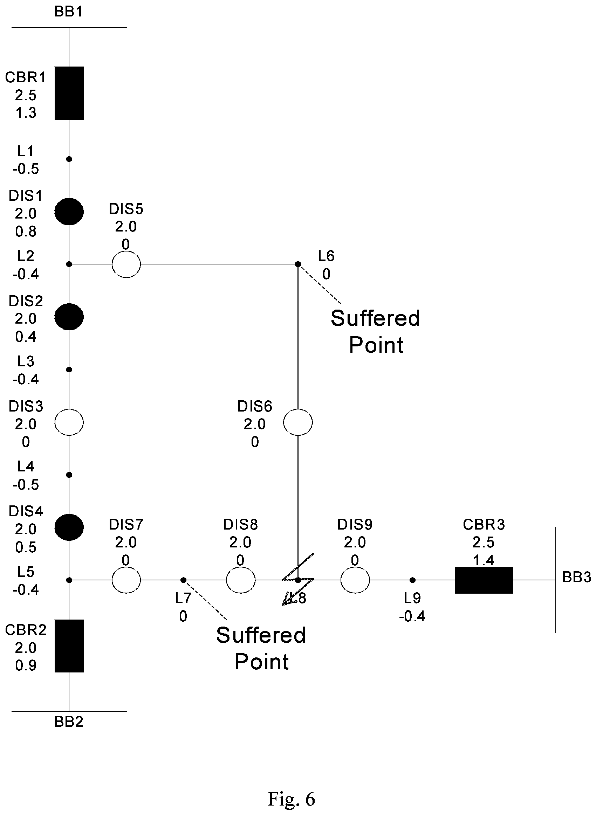

After fault detection, slave station 3 will open section switches Dis 6, Dis 8, and Dis 9 to isolate the fault connectivity node L8. After fault isolation, the circuit breaker CBR 3 can be closed to restore power supply to connectivity node L9. This is referred to as inner restoration. Apparently connectivity nodes L6 and L7 can not get power through inner restoration. Fig.6 shows the status of the network at this point.

Since no fault occurs for connectivity nodes L6 and L7, the system will try to restore power supply service to these two nodes to minimize the influence of the fault to the whole system.

To restore power supply to the suffered nodes, slave station 3 will firstly find available routes including Tie-switches to these nodes in its own domain. Taking L6 as an example, since Dis 5→L6 is an available route to L6 that includes a Tie-switch Dis 5, slave station 3 will try to turn on the route, so that power from BB1 can be supplied to L6. In the present specification, an available route means a rout through which power can be transmitted.

The specific communication between two slave stations in a process of service restoration is illustrated in Fig. 4.

As shown in Fig.4, if a slave station (for example, slave station 3) is suffered from a fault, it will perform fault detection and isolation as well as inner service restoration by itself. After that, it will cooperate with other slave stations to restore power supply to other suffered connectivity nodes. Messages exchanged between the slave station and an opposite slave station include:

### HasAvailableRoute Request

For example, slave station 3 will firstly find a route comprising a Tie-switch in Domain 3 to the suffered connectivity node (L6, in this example). As shown in Fig.6, there is a route Dis 5→L6 in Domain 3 available to L6, and this route includes a Tie-switch Dis 5. Then slave station 3 will send the request to slave station 1 to inquire if there is an available route to the suffered connectivity node (L6 in this case) in Domain 1, because the Tie-switch Dis 5 also belongs to Domain 1.

### HasAvailableRoute Response

Upon receiving the HasAvailableRoute Request, slave station 1 will search for an available route to the Tie-switch Dis 5 and respond with HasAvailableRoute Response. The message HasAvailableRoute Response is a binary variable. If the value of this variable is TRUE, it means that there is an available route in Domain 1. If the value of this variable is FALSE, it means that there is no available route in Domain 1.

As a result of the search, the route BB1→BBR1→L1→Dis 1→L2→Dis 5 will be determined by slave station 1 as an available route to Dis 5. Then slave station 1 will respond to slave station 3 with TRUE.

In an embodiment, if slave station 1 finds an available route to Dis 5, it will also calculate the capacity of this route and send capacity data together with a TRUE response to slave station 3.

### Operate Request

If slave station 3 receives a TRUE response and the capacity data from slave station 1, it will determine whether the capacity of domain 1 matches the load requirement of L6. If yes, slave station 3 will operate to close Dis 5, since Dis 5 is a real Tie-switch of Domain 3 and under direct control of slave station 3. In case Dis 5 is a virtual Tie-switch of Domain 3, slave station 3 will send an Operate Request to slave station 1 to request slave station 1 to close Dis 5. If the capacity of domain 1 does not match the load requirement of L6, slave station 3 will try to request other slave station, for example, slave station 2, to provide power supply to L6, or just leave L6 not supplied with power and wait for trouble shooting.

### Operate Response

Upon receiving the Operate Request to close a real Tie-switch Dis 5, slave station 1 will operate to close Dis 5 and report the operation result to slave station 3.

The process of restoring service to the connectivity node L7 is similar to the process of restoring service to L6 as discussed above, and the details of which will not be described again.

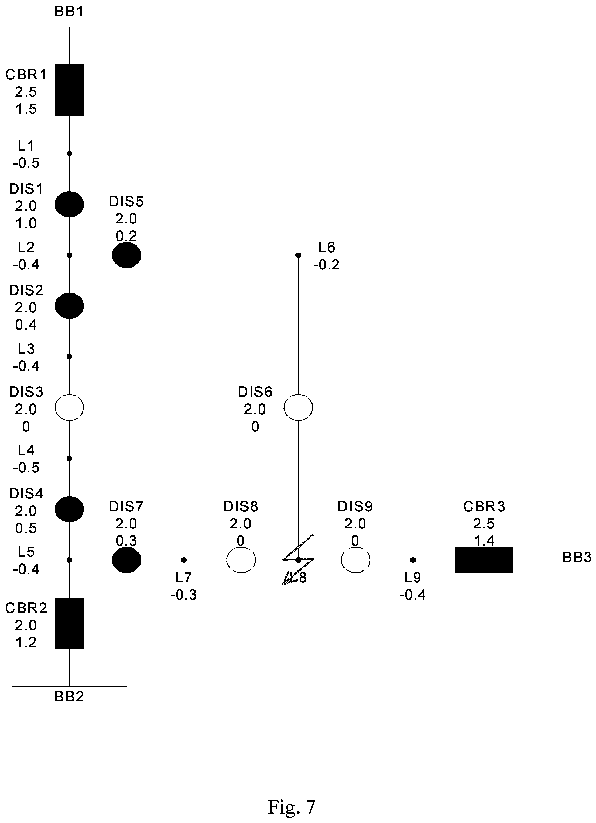

Fig.7 shows the status in which the fault is isolated and service is restored for connectivity nodes without fault. As shown in Fig.7, power is supplied to L6 from BB1 through the Tie-switch Dis 5, and to L7 from BB2 through the Tie-switch Dis 7.

It is appreciated from the above description that the slave stations independently act as agents of the master station, and cooperate with each other to fulfill the FDIR functions without communication with the master station. Accordingly, communication channel failure from the master station to slave stations will not influence performance of FDIR functions. Further, since each slave station only comprises configurations of its own domain, once a change occurs in a domain, only the slave station of the specific domain needs to be reconfigured.

The principle of the present invention has been illustrated by way of specific embodiments with reference to the drawings, though the skilled in the art should appreciate that the embodiments are just illustrative but can not be considered as limiting the scope of the invention that is defined by the accompanying claims.

## Claims

1. A feeder automation system comprising:
a first domain (Domain 1) comprising a first slave station;
a second domain (Domain 2) comprising a second slave station; and
a tie-switch (DIS3) provided between the first domain and the second domain; **characterised in that** the first slave station is adapted to operate the tie-switch directly, and the second slave station is adapted to operate the tie-switch through the first slave station.

2. The feeder automation system of claim 1, wherein the tie-switch is configured as a real tie-switch in the first slave station, and as a virtual tie-switch in the second slave station.

3. The feeder automation system of claim 1 or 2, wherein the first slave station comprises the configuration of the first domain, and the second slave station comprises the configuration of the second domain.

4. The feeder automation system of any one of claims 1-3, wherein the first slave station comprises means for supervising and operating the first domain, and the second slave station comprises means for supervising and operating the second domain.

5. The feeder automation system of any of claims 1-4, further comprises a master station in communication with the first slave station and the second slave station.

6. The feeder automation system of any of claims 1-5, wherein the first domain comprises a terminal device in communication with the first slave station, and the second domain comprises a terminal device in communication with the second slave station.

7. A method for operating a feeder automation system comprising: a first domain (Domain 1) provided with a first slave station; a second domain (Domain 2) provided with a second slave station; and a tie-switch (DIS3) provided between the first domain and the second domain, wherein the first slave station is adapted to operate the tie-switch directly, and the second slave station is adapted to operate the tie-switch through the first slave station;
the method comprises:
detecting, by the first slave station, a fault in the first domain;
determining, by the first slave station, the location of the fault in the first domain;
isolating, by the first slave station, the location of the fault in the first domain; and
restoring, by the first slave station, power supply to the first domain.

8. The method of claim 7, wherein the restoring power supply to the first domain further comprises:
searching, by the first slave station in the first domain, an available route to a connectivity node that is to be restored with power supply comprising the tie-switch;
sending, by the first slave station, a request to the second slave station to inquire if there is an available route to the tie-switch in the second domain;
receiving, by the first slave station, a response from the second slave station indicating that there is an available route to the tie-switch in the second domain;
closing, by the first slave station, the tie-switch.

9. The method of claim 8, wherein the response comprises information of load capacity of the route in the second domain, and prior to closing the tie-switch, the method further comprises determining, by the first slave station, whether the capacity of the route in the second domain matches the requirement of the connectivity node.

10. The method of any of claims 7-9, wherein the first slave station regularly reports, to the second slave station, the state of the tie-switch and the energization state of the feeder in the first domain connected to the tie-switch, and the second slave station regularly reports the energization state of the feeder in the second domain connected to the tie-switch to the first slave station.

11. The method of any of claims 7-10 further comprising:
prior to detecting the fault,
receiving, by the first slave station, information from a feeder terminal unit in the first domain; and
receiving, by the second slave station, information from a feeder terminal unit in the second domain.

12. The method of claim 11, wherein the information received by the first slave station comprises a current and a voltage of a feeder and a state of a switch supervised by the feeder terminal unit in the first domain, and the information received by the second slave station comprises a current and a voltage of a feeder and a state of a switch supervised by the feeder terminal unit in the second domain.

13. A method for operating a feeder automation system comprising: a first domain (Domain 1) provided with a first slave station; a second domain (Domain 2) provided with a second slave station; and a tie-switch (DIS3) provided between the first domain and the second domain, wherein the first slave station is adapted to operate the tie-switch directly, and the second slave station is adapted to operate the tie-switch through the first slave station;
the method comprises:
detecting, by the second slave station, a fault in the second domain;
determining, by the second slave station, the location of the fault in the second domain;
isolating, by the second slave station, the location of the fault in the second domain; and
restoring, by the second slave station, power supply to the second domain.

14. The method of claim 13, wherein the restoring power supply to the second domain further comprises:
searching, by the second slave station in the second domain, an available route to a connectivity node that is to be restored with power supply comprising the tie-switch;
sending, by the second slave station, an inquiry request to the first slave station to inquire if there is an available route to the tie-switch in the first domain;
receiving, by the second slave station, a response from the first slave station indicating that there is an available route to the tie-switch in the first domain;
sending, by the second slave station, an operation request to the first slave station to close the tie-switch; and
receiving, by the second slave station, a report of closing the tie-switch from the first slave station.

15. The method of claim 14, wherein the response comprises information of load capacity of the route in the first domain, and prior to sending the operation request to the first slave station to close the tie-switch, the method further comprises determining, by the second slave station, whether the capacity of the route in the first domain matches the requirement of the connectivity node.

## Patentansprüche

1. Ein Feeder-Automationssystem, umfassend:
eine erste Domäne (Domain 1), die eine erste Nebenstation umfasst;
eine zweite Domäne (Domain 2), die eine zweite Nebenstation umfasst; und
einen Tie-Schalter (DIS3), der zwischen der ersten Domäne und der zweiten Domäne bereitgestellt ist;
**dadurch gekennzeichnet, dass** die erste Nebenstation angepasst ist, um den Tie-Schalter direkt zu steuern, und die zweite Nebenstation angepasst ist, um den Tie-Schalter durch die erste Nebenstation zu steuern.

2. Das Feeder-Automationssystem gemäß Anspruch 1, wobei der Tie-Schalter in der ersten Nebenstation als ein realer Tie-Schalter und in der zweiten Nebenstation als ein virtueller Tie-Schalter eingerichtet ist.

3. Das Feeder-Automationssystem gemäß Anspruch 1 oder 2, wobei die erste Nebenstation die Konfiguration der ersten Domäne umfasst, und die zweite Nebenstation die Konfiguration der zweiten Domäne umfasst.

4. Das Feeder-Automationssystem gemäß einem der Ansprüche 1-3, wobei die erste Nebenstation Mittel umfasst, um die erste Domäne zu überwachen und zu steuern, und die zweite Nebenstation Mittel umfasst, um die zweite Domäne zu überwachen und zu steuern.

5. Das Feeder-Automationssystem gemäß einem der Ansprüche 1-4, weiter umfassend eine Hauptstation in Kommunikation mit der ersten Nebenstation und der zweiten Nebenstation.

6. Das Feeder-Automationssystem gemäß einem der Ansprüche 1-5, wobei die erste Domäne eine Terminalvorrichtung in Kommunikation mit der ersten Nebenstation umfasst, und die zweite Domäne eine Terminalvorrichtung in Kommunikation mit der zweiten Nebenstation umfasst.

7. Ein Verfahren zum Steuern eines Feeder-Automationssystems, umfassend: eine erste Domäne (Domain 1), die mit einer ersten Nebenstation versehen ist; eine zweite Domäne (Domain 2), die mit einer zweiten Nebenstation versehen ist; und einen Tie-Schalter (DIS3), der zwischen der ersten Domäne und der zweiten Domäne bereitgestellt ist, wobei die erste Nebenstation angepasst ist, um den Tie-Schalter direkt zu steuern, und die zweite Nebenstation angepasst ist, um den Tie-Schalter durch die erste Nebenstation zu steuern;
das Verfahren umfasst:
Erfassen eines Störfalles in der ersten Domäne durch die erste Nebenstation;
Bestimmen des Ortes des Störfalles in der ersten Domäne durch die erste Nebenstation;
Isolieren des Ortes des Störfalles in der ersten Domäne durch die erste Nebenstation; und
Wiederherstellen der Energieversorgung zur ersten Domäne durch die erste Nebenstation.

8. Das Verfahren gemäß Anspruch 7, wobei das Wiederherstellen der Energieversorgung zur ersten Domäne weiter umfasst:
Suchen, durch die erste Nebenstation in der ersten Domäne, eines verfügbaren Weges zu einem wieder mit Energie zu versorgenden Verbindungsknotens umfassend den Tie-Schalter;
Senden einer Anfrage durch die erste Nebenstation an die zweite Nebenstation um anzufragen, ob es einen verfügbaren Weg zum Tie-Schalter in der zweiten Domäne gibt;
Empfangen einer Antwort durch die erste Nebenstation von der zweiten Nebenstation, die angibt, dass es einen verfügbaren Weg zum Tie-Schalter in der zweiten Domäne gibt;
Schließen des Tie-Schalters durch die erste Nebenstation.

9. Das Verfahren gemäß Anspruch 8, wobei die Antwort Informationen zur Ladekapazität des Weges in der zweiten Domäne umfasst, und das Verfahren umfasst weiter, bevor der Tie-Schalter geschlossen wird, ein Bestimmen durch die erste Nebenstation, ob die Kapazität des Weges in der zweiten Domäne den Erfordernissen des Verbindungsknotens entspricht.

10. Das Verfahren gemäß einem der Ansprüche 7-9, wobei die erste Nebenstation regelmäßig an die zweite Nebenstation über den Zustand des Tie-Schalters und den Bestromungszustand des Feeders in der ersten Domäne, der mit dem Tie-Schalter verbunden ist, berichtet, und die zweite Nebenstation regelmäßig den Bestromungszustand des Feeders in der zweiten Domäne, der mit dem Tie-Schalter mit der ersten Nebenstation verbunden ist, berichtet.

11. Das Verfahren gemäß einem der Ansprüche 7-10, weiter umfassend:
vor der Erfassung des Störfalles, Empfangen von Informationen von einer Feeder-Terminaleinheit in der ersten Domäne durch die erste Nebenstation; und
Empfangen von Informationen von einer Feeder-Terminaleinheit in der zweiten Domäne durch die zweite Nebenstation.

12. Das Verfahren gemäß Anspruch 11, wobei die Informationen, die von der ersten Nebenstation empfangen werden, eine Stromstärke und Spannung eines Feeders und einen Zustand eines Schalters, die von der Feeder-Terminaleinheit in der ersten Domäne überwacht werden, umfassen, und die Informationen, die von der zweiten Nebenstation empfangen werden, eine Stromstärke und Spannung eines Feeders und einen Zustand eines Schalters, die von der Feeder-Terminaleinheit in der zweiten Domäne überwacht werden, umfassen.

13. Ein Verfahren zum Steuern eines Feeder-Automationssystems, umfassend: eine erste Domäne (Domain 1), die mit einer ersten Nebenstation versehen ist; eine zweite Domäne (Domain 2), die mit einer zweiten Nebenstation versehen ist; und einen Tie-Schalter (DIS3), der zwischen der ersten Domäne und der zweiten Domäne bereitgestellt ist, wobei die erste Nebenstation angepasst ist, um den Tie-Schalter direkt zu steuern, und die zweite Nebenstation angepasst ist, um den Tie-Schalter durch die erste Nebenstation zu steuern;
das Verfahren umfasst:
Erfassen eines Störfalles in der zweiten Domäne durch die zweite Nebenstation;
Bestimmen des Ortes des Störfalles in der zweiten Domäne durch die zweite Nebenstation;
Isolieren des Ortes des Störfalles in der zweiten Domäne durch die zweite Nebenstation; und
Wiederherstellen der Energieversorgung zur zweiten Domäne durch die zweite Nebenstation.

14. Das Verfahren gemäß Anspruch 13, wobei das Wiederherstellen der Energieversorgung zur zweiten Domäne weiter umfasst:
Suchen, durch die zweite Nebenstation in der zweiten Domäne, eines verfügbaren Weges zu einem wieder mit Energie zu versorgenden Verbindungsknotens umfassend den Tie-Schalter;
Senden einer Anfrage durch die zweite Nebenstation an die erste Nebenstation um anzufragen, ob es einen verfügbaren Weg zum Tie-Schalter in der ersten Domäne gibt;
Empfangen einer Antwort durch die zweite Nebenstation von der ersten Nebenstation, die angibt, dass es einen verfügbaren Weg zum Tie-Schalter in der ersten Domäne gibt;
Senden einer Steueranfrage durch die zweite Nebenstation an die erste Nebenstation, um den Tie-Schalter zu schließen; und
Empfangen eines Berichtes durch die zweite Nebenstation von der ersten Nebenstation über die Schließung des Tie-Schalters.

15. Das Verfahren gemäß Anspruch 14, wobei die Antwort Informationen zur Ladekapazität des Weges in der ersten Domäne umfasst, und das Verfahren umfasst weiter, vor dem Senden der Steueranfrage an die erste Nebenstation zum Schließen des Tie-Schalters, ein Bestimmen durch die zweite Nebenstation, ob die Kapazität des Weges in der ersten Domäne den Erfordernissen des Verbindungsknotens entspricht.

## Revendications

1. Système d'automatisation de ligne d'alimentation comprenant:
un premier domaine (Domaine 1) comprenant une première station esclave;
un deuxième domaine (Domaine 2) comprenant une deuxième station esclave; et
un interrupteur d'aiguillage (DIS3) prévu entre le premier domaine et le deuxième domaine;
**caractérisé par le fait que** la première station esclave est adaptée pour faire fonctionner l'interrupteur d'aiguillage directement, et la deuxième station esclave est adaptée pour faire fonctionner l'interrupteur d'aiguillage à travers la première station esclave.

2. Système d'automatisation de ligne d'alimentation selon la revendication 1, dans lequel l'interrupteur d'aiguillage est configuré comme un véritable interrupteur d'aiguillage dans la première station esclave, et comme interrupteur d'aiguillage virtuel dans la deuxième station esclave.

3. Système d'automatisation de ligne d'alimentation selon la revendication 1 ou 2, dans lequel la première station esclave comprend la configuration du premier domaine, et la deuxième station esclave comprend la configuration du deuxième domaine.

4. Système d'automatisation de ligne d'alimentation selon l'une quelconque des revendications 1 à 3, dans lequel la première station esclave comprend un moyen destiné à surveiller et faire fonctionner le premier domaine, et la deuxième station esclave comprend un moyen destiné à surveiller et faire fonctionner le deuxième domaine.

5. Système d'automatisation de ligne d'alimentation selon l'une quelconque des revendications 1 à 4, comprenant par ailleurs une station maître en communication avec la première station esclave et la deuxième station esclave.

6. Système d'automatisation de ligne d'alimentation selon l'une quelconque des revendications 1 à 5, dans lequel le premier domaine comprend un dispositif terminal en communication avec la première station esclave, et le deuxième domaine comprend un dispositif terminal en communication avec la deuxième station esclave.

7. Procédé pour faire fonctionner un système d'automatisation de ligne d'alimentation comprenant: un premier domaine (Domaine 1) pourvu d'une première station esclave; un deuxième domaine (Domaine 2) pourvu d'une deuxième station esclave; et un interrupteur d'aiguillage (DIS3) prévu entre le premier domaine et le deuxième domaine, dans lequel la première station esclave est adaptée pour faire fonctionner l'interrupteur d'aiguillage directement, et la deuxième station esclave est adaptée pour faire fonctionner l'interrupteur d'aiguillage à travers la première station esclave;
le procédé comprend le fait de:
détecter, par la première station esclave, un défaut dans le premier domaine;
déterminer, par la première station esclave, l'endroit du défaut dans le premier domaine;
isoler, par la première station esclave, l'endroit du défaut dans le premier domaine; et
rétablir, par la première station esclave, l'alimentation électrique vers le premier domaine.

8. Procédé selon la revendication 7, dans lequel le rétablissement de l'alimentation électrique vers le premier domaine comprend par ailleurs le fait de:
chercher, par la première station esclave dans le premier domaine, une route disponible vers un noeud de connectivité qui doit être rétabli avec une alimentation électrique comprenant l'interrupteur d'aiguillage;
envoyer, par la première station esclave, une demande à la deuxième station esclave pour s'informer de s'il existe une route disponible pour l'interrupteur d'aiguillage dans le deuxième domaine;
recevoir, par la première station esclave, une réponse de la deuxième station esclave indiquant qu'il existe une route disponible pour l'interrupteur d'aiguillage dans le deuxième domaine;
fermer, par la première station esclave, l'interrupteur d'aiguillage.

9. Procédé selon la revendication 8, dans lequel la réponse comprend des informations de capacité de charge de la route dans le deuxième domaine et, avant de fermer l'interrupteur d'aiguillage, le procédé comprend par ailleurs le fait de déterminer, par la première station esclave, si la capacité de la route dans le deuxième domaine correspond à la condition requise du noeud de connectivité.

10. Procédé selon l'une quelconque des revendications 7 à 9, dans lequel la première station esclave rapporte régulièrement à la deuxième station esclave l'état du interrupteur d'aiguillage et l'état d'excitation du dispositif d'alimentation dans le premier domaine connecté au interrupteur d'aiguillage, et la deuxième station esclave rapporte régulièrement l'état d'alimentation du dispositif d'alimentation dans le deuxième domaine connecté à l'interrupteur d'aiguillage dans la première station esclave.

11. Procédé selon l'une quelconque des revendications 7 à 10, comprenant par ailleurs le fait de:
avant de détecter le défaut,
recevoir, par la première station esclave, des informations d'une unité terminale de dispositif d'alimentation dans le premier domaine; et
recevoir, par la deuxième station esclave, des informations d'une unité terminale de dispositif d'alimentation dans le deuxième domaine.

12. Procédé selon la revendication 11, dans lequel les informations reçues par la première station esclave comprennent un courant et une tension d'un dispositif d'alimentation et un état d'un interrupteur surveillé par l'unité terminale de dispositif d'alimentation dans le premier domaine et les informations reçues par la deuxième station esclave comprennent un courant et une tension d'un dispositif d'alimentation et un état d'un interrupteur surveillé par l'unité terminale de dispositif d'alimentation dans le deuxième domaine.

13. Procédé pour faire fonctionner un système d'automatisation de ligne d'alimentation comprenant: un premier domaine (Domaine 1) pourvu d'une première station esclave; un deuxième domaine (Domaine 2) pourvu d'une deuxième station esclave; et un interrupteur d'aiguillage (DIS3) prévu entre le premier domaine et le deuxième domaine, dans lequel la première station esclave est adaptée pour faire fonctionner l'interrupteur d'aiguillage directement, et la deuxième station esclave est adaptée pour faire fonctionner l'interrupteur d'aiguillage à travers la première station esclave;
le procédé comprend le fait de:
détecter, par la deuxième station esclave, un défaut dans le deuxième domaine;
déterminer, par la deuxième station esclave, l'endroit du défaut dans le deuxième domaine;
isoler, par la deuxième station esclave, l'endroit du défaut dans le deuxième domaine; et
rétablir, par la deuxième station esclave, l'alimentation électrique vers le deuxième domaine.

14. Procédé selon la revendication 13, dans lequel le rétablissement de l'alimentation électrique vers le deuxième domaine comprend par ailleurs le fait de:
chercher, par la deuxième station esclave dans le deuxième domaine, une route disponible vers un noeud de connectivité qui doit être rétabli avec une alimentation électrique comprenant l'interrupteur d'aiguillage;
envoyer, par la deuxième station esclave, une demande d'information à la première station esclave pour s'informer de s'il existe une route disponible pour l'interrupteur d'aiguillage dans le premier domaine;
recevoir, par la deuxième station esclave, une réponse de la première station esclave indiquant qu'il existe une route disponible pour l'interrupteur d'aiguillage dans le premier domaine;
envoyer, par la deuxième station esclave, une demande de fonctionnement à la première station esclave pour fermer l'interrupteur d'aiguillage; et
recevoir, par la deuxième station esclave, un rapport de fermeture de l'interrupteur d'aiguillage de la première station esclave.

15. Procédé selon la revendication 14, dans lequel la réponse comprend des informations de capacité de charge de la route dans le premier domaine et, avant d'envoyer la demande de fonctionnement à la première station esclave pour fermer l'interrupteur d'aiguillage, le procédé comprend par ailleurs, le fait de déterminer, par la deuxième station esclave, si la capacité de la route dans le premier domaine correspond à la condition requise du noeud de connectivité.
